# EUROPEAN PATENT SPECIFICATION

(11) **EP 2 533 086 B1**
(45) Date of publication and mention of the grant of the patent: **13.08.2014**
(21) Application number: 11169104.4
(22) Date of filing: 08.06.2011
(51) Int. Cl.: G02B 6/44

(54) **Fiber management system**
Faserverwaltungssystem
Système de gestion de fibres

(43) Date of publication of application: 12.12.2012
(73) Proprietor: Tyco Electronics Raychem BVBA, 3010 Kessel-Lo (BE)
(72) Inventor: Bryon, Roel Modest Willy, 3200 Aarschot (BE); Kempeneers, Dirk, 3200 Aarschot (BE); Vastmans, Kristof, 3370 Boutersen (BE); Foulon, Wouter, 3000 Leuven (BE)
(74) Representative: Obst, Bernhard

(56) References cited:
- WO-A1-00/65397
- WO-A1-96/10203
- WO-A1-2007/033408

## Description

### BACKGROUND

Fiberoptic communication systems are becoming prevalent in part because service providers want to deliver high bandwidth communication capabilities (e.g., data and voice) to customers. Fiberoptic communication systems employ a network of fiberoptic cables to transmit large volumes of data and voice signals over relatively long distances. The ability to effectively manage optical fibers and optical components is an important part of most fiberoptic communication systems. Fiber management trays are often used to facilitate managing excess fiber length needed for efficiently providing optical splices between optical fibers. Fiber management trays are also used to support optical components such as optical splitters (e.g., optical power splitters and wavelength division multiplexers (WDM)) and splice sleeves.

An example fiber management system is disclosed by International Publication Number WO 98/22842. The '842 publication discloses a fiber management system including tray mounting plates adapted to be mounted to frames having predetermined profiles compatible with connection interfaces provided on the tray mounting plates. A plurality of fiber management trays are pivotally mounted to each of the tray mounting plates. The fiber management system uses an optical fiber routing scheme where optical fibers are routed within open-sided grooves provided at front sides of the tray mounting plates. The optical fibers from the left and right sides of the tray mounting plates cross each other at mid regions of the tray mounting plates and are then routed onto the fiber management trays for splicing, splitting, fiber storage or other purposes. Presumably because the crossing optical fiber have similar constructions, such fiber-to-fiber crossing within the front grooves has not been shown to cause negative system performance issues such as signal degradation.

The WO 00/65397 A1 discloses an optical fibre organiser system, comprising a support, at least one fibre organiser module selectively connectable to the support, a housing for accommodating the or each module mounted on the support, and a cable entry means at or adjacent one end of the support through which one or more fibre optic cables can enter the housing generally parallel to the length of the support. The support comprises two substantially parallel elongate members, the or each module being pivotally connectable to said members. The pivotal connection between a module and at least one of the members defines a passage for the introduction of an optical fibre into said module. The or each module has an associated cable guide for directing optical fibres into or out from the module with a predetermined bend radius. The cable guides are aligned with respective corresponding openings such that optical fibres can be introduced into the tray by threading them through the arcuate tubular guides so as to pass through the openings and then into the interior of the tray.

The WO 96/10203 A1 discloses a splice tray for accommodating optical fibres, the tray comprising a body with a plurality of splice holders at fixed locations thereon, the body having fibre access points at which fibre can enter and leave the body, and fibre paths on the body leading from the access points to and from each splice holder, each holder being adapted to receive and hold a splice reinforcer within which a fibre splice is present, and the body being provided with means to accommodate a length of fibre either side of the splice.

The WO 2007/033408 A1 discloses an access enclosure for holding at least one loop of uncut optic fibre, the access enclosure including a support structure, a plurality of first storage trays pivotally mounted to the support structure to.form a first bank of support trays on one side of the support structure, a plurality of second storage trays pivotally mounted to the support structure to form a second bank of support trays on the opposite side of the support structure, a first portion of the loop being stored on one of said first storage trays, guide means for guiding a second portion of the loop about the support structure to the opposite of the support structure, and a third portion of the loop being stored on one side of said second storage trays.

### SUMMARY

One aspect of the present disclosure relates to a fiber management system that routes dissimilar optical components to a fiber management tray. For example, in certain embodiments, both optical fiber guide tubes and optical fibers are routed to the fiber management trays. Because the optical fibers and the optical fiber guide tubes are dissimilar in structure, it is desirable to utilize routing configurations that minimize or eliminate crossing that may occur between the optical fibers and the optical fiber guide tubes.

The problem is solved by a fiber management system with the features of claim 1. Preferred embodiments are claimed in the sub claims.

In this regard, to the invention discloses routing configurations that route optical fibers and optical fiber guide tubes on opposite sides of a tray mounting plate so as to prevent the optical fiber guide tubes and the optical fibers from crossing one another as the optical fibers and the optical fiber guide tubes are both routed to the same fiber management tray.

For this purpose a fiber management system including a tray mounting plate having a top end, a bottom end, a front side and a back side. The tray mounting plate also includes a first side and an opposite second side. The first side and the second side of the tray mounting plate extend between the top and bottom ends of the tray mounting plate. The tray mounting plate is divided by a vertical reference plane that extends in a back-to-front orientation and that bisects the tray mounting plate. The tray mounting plate includes a first region position between the first side of the tray mounting plate and the vertical reference plane and a second region position between the second side of the tray mounting plate and the vertical reference plane. The front side of the tray mounting plate defines a plurality of front fiber routing grooves that extend lengthwise between the first and second sides. The front fiber routing grooves have open-sided configurations. The fiber management system also includes a first fiber management tray pivotally connected to the tray mounting plate. The front fiber routing grooves include a first fiber routing groove that corresponds to the first fiber management tray. The first fiber management tray includes a first fiber entrance/exit location positioned in front of the first region of the tray mounting plate and a second fiber entrance/exit location position in front of the second region of the tray mounting plate. The first region of the tray mounting plate defines a plurality of through-holes that extend through the tray mounting plate. The plurality of through-holes includes a first through-hole that corresponds to the first fiber management tray. The fiber management system also includes a first fiber guide tube that extends from the second side of the tray mounting plate across the back side of the tray mounting plate to the first through-hole. The first fiber guide tube also extends through the first through-hole from the back side of the tray mounting plate to the front side of the tray mounting plate. The first fiber guide tube further extends from the first through-hole into the first fiber management tray through the first fiber entrance/exit location. An optical fiber can also be routed from the first side of the tray mounting plate across the front side of the tray mounting plate within the first fiber routing groove. From the first fiber routing groove, the optical fiber can be routed into the first fiber management tray through the second fiber entrance/exit location. Because the first fiber guide tube is routed along the back side of the tray mounting plate and the optical fiber is routed along the front side of the tray mounting plate, crossing of the first fiber guide tube and the optical fiber is prevented.

### BRIEF DESCRIPTION OF THE DRAWINGS

Figure 1 is front, left perspective view of a fiber management system in accordance with the principles of the present disclosure, the fiber management system includes a plurality of tray mounting plates and a plurality of fiber management trays that pivotally connect to the tray mounting plates;
Figure 2 is a left, side view of the fiber management system of Figure 1;
Figure 3 is a top, plan view of the fiber management system of Figure 1;
Figure 4 is a front, right side perspective view of one of the tray mounting plates of the fiber management system of Figure 1;
Figure 5 is a front, left side perspective view of the tray mounting plate of Figure 4;
Figure 6 is a front view of the tray mounting plate of Figure 4;
Figure 7 is a back view of the tray mounting plate of Figure 4;
Figure 8 is a top view of the tray mounting plate of Figure 4;
Figure 9 is a bottom view of the tray mounting plate of Figure 4;
Figure 10 is a left, side view of the tray mounting plate of Figure 4;
Figure 11 is a right, side view of the tray mounting plate of Figure 4;
Figure 12 is a top, front perspective view of one of the fiber management trays of the fiber management system of Figure 1;
Figure 13 is a bottom, rear perspective view of the fiber management tray of Figure 12; and
Figure 14 shows an example optical fiber and optical fiber guide tube routing configuration that can be implemented with the fiber management system of Figure 1.

### DETAILED DESCRIPTION

Aspects of the present disclosure relate to fiber management systems that can be used in fiberoptic systems such as fiber-to-the-premises (FTTP) networks and air blown fiber networks. In certain embodiments, the fiber management systems may be used in either inside or outside environments. In certain embodiments, the fiber management systems can be used at a central office, an exchange, a head end or at a customer premises. In other embodiments, the fiber management system can be mounted within environmentally sealed enclosures such as street cabinets, splice closures, pedestals, domes, wall boxes or other structures adapted for outside environmental use. The fiber management systems can also be used on structures such as frames, racks, drawers, shelves, panels, closets or other structures.

Generally, the present disclosure relates to a fiber management system that minimizes or reduces crossing that occurs between optical fibers and optical fiber guide tubes that are both being routed to the same fiber management tray. In certain embodiments, anti-crossing structure is incorporated into a groove plate used to pivotally mount a plurality of fiber management trays.

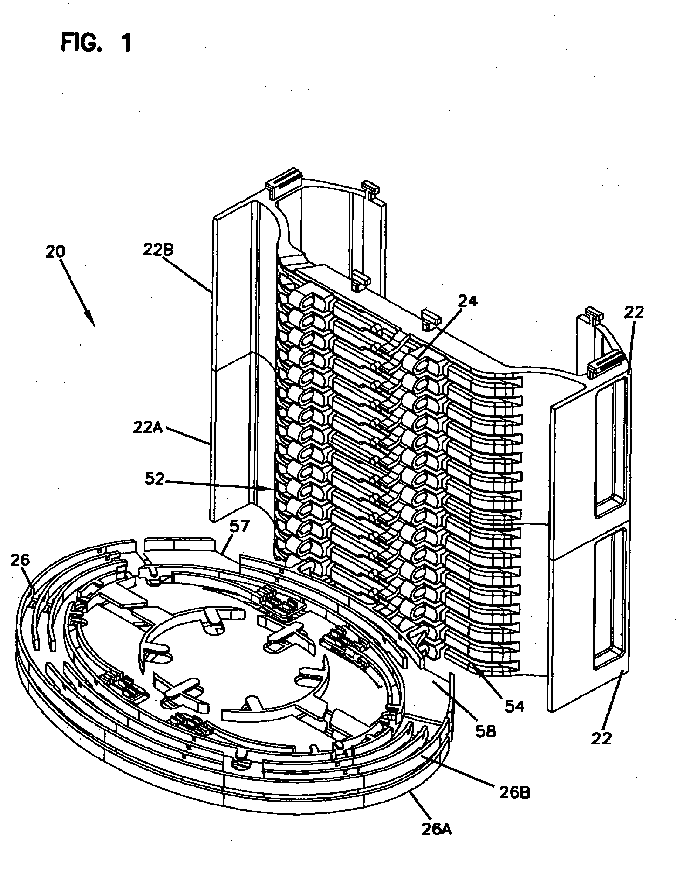

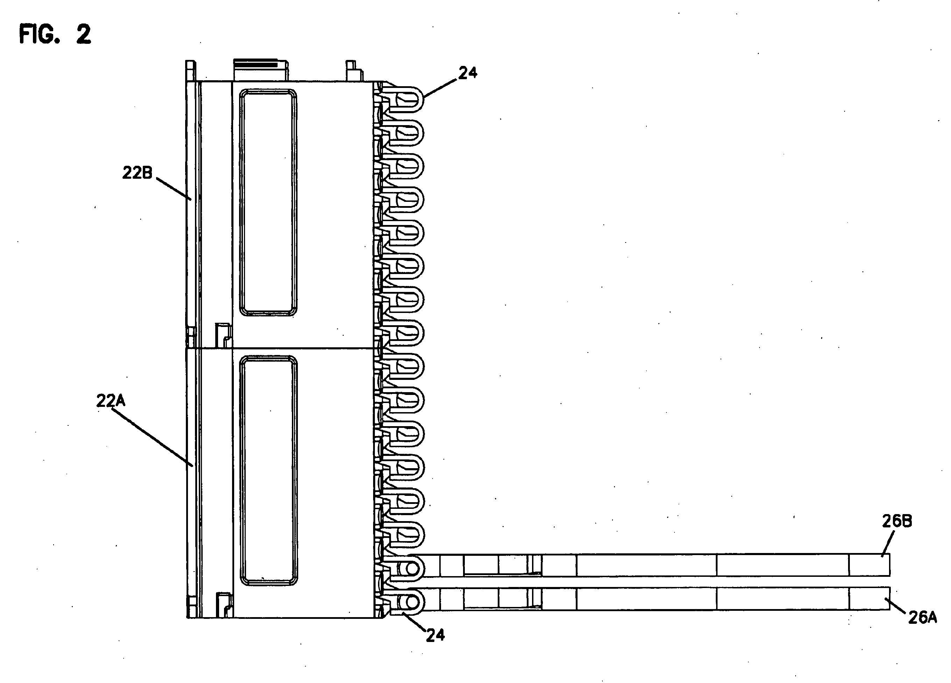

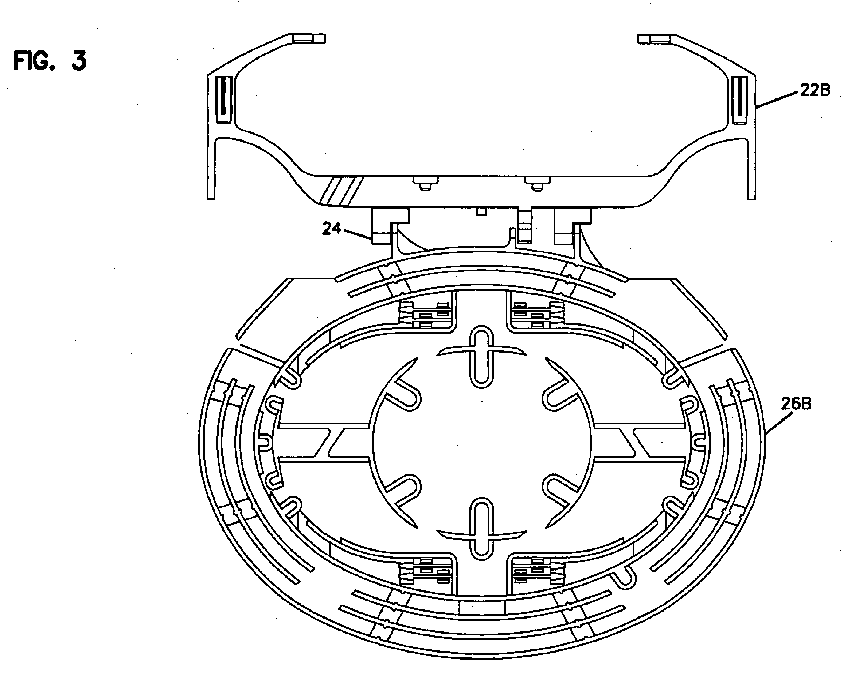

Figures 1-3 show a fiber management system 20 in accordance with the principles of the present disclosure. The fiber management system includes a plurality of tray mounting plates 22 (i.e., tray mounting bases, tray mounting bodies, tray mounting blocks, tray mounting members, groove plates, etc.) that are modular in nature and that can be stacked one on top of the other. The tray mounting plates 22 can include a connection interface that is compatible with a corresponding interface (e.g., profile) of a frame or other structure of mounting system (e.g., a universal mounting system). The tray mounting plates 22 are shown including a first tray mounting plate 22A and a second tray mounting plate 22B having identical configurations. Each of the tray mounting plates 22 includes a plurality of tray mounting locations 24 for pivotally mounting fiber management trays 26. As shown at Figure 1, first and second fiber management trays 26A, 26B having identical configurations are shown connected to the first tray mounting plate 22A. In certain embodiments, each of the tray mounting plates 22 can include at least four tray mounting locations 24 for allowing at least four of the fiber management trays 26 to be pivotally mounted thereto. In other embodiments, each of the tray mounting plates 22 can include at least eight tray mounting locations 24 for allowing at least eight of the fiber management trays 26 to be mounted to each tray mounting plate 22.

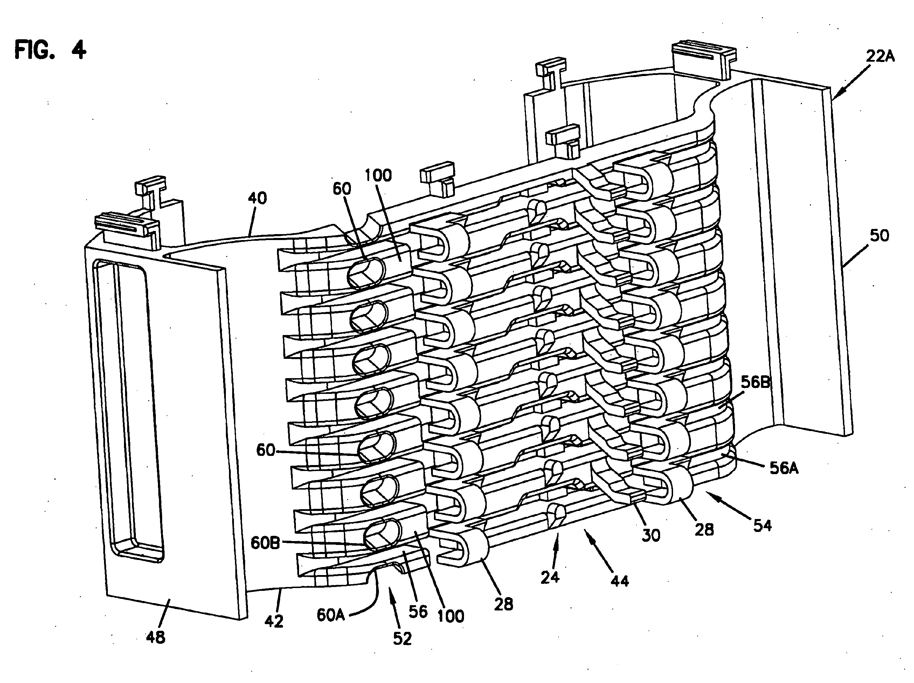

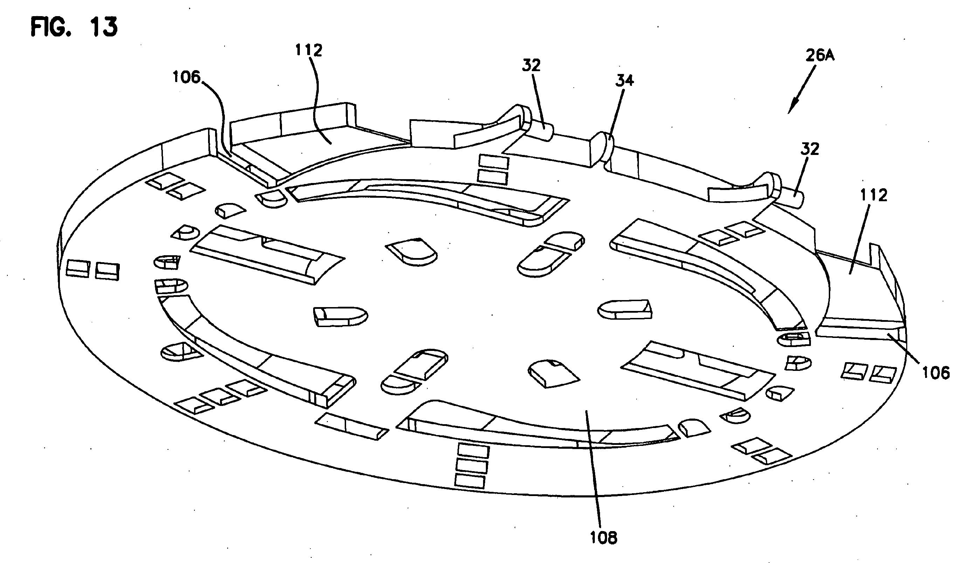

Referring to Figure 4, the tray mounting locations 24 of the tray mounting plates 22 each include two pin receivers 28 and a flexible retention latch 30 positioned between the pin receivers 28. The pin receivers 28 are adapted to receive hinge pins 32 (see Fig. 13) of the fiber management trays 26. To install one of the fiber management trays 26 to a tray mounting location 24, the corresponding flexible retention latch 30 is flexed downwardly and the fiber management tray 26 is manipulated such that the hinge pins 32 slide axially into the pin receivers 28. Once the hinge pins 32 are fully inserted within the pin receivers 28, the flexible retention latch 30 is released and the flexible retention latch 30 elastically moves upwardly to a retention position where the latch 30 interferes with a tab 34 (see Fig. 13) on the fiber management tray 26. Interference between the flexible retention latch 30 and the tab 34 prevents the hinge pins 32 from unintentionally disengaging from the pin receivers 28.

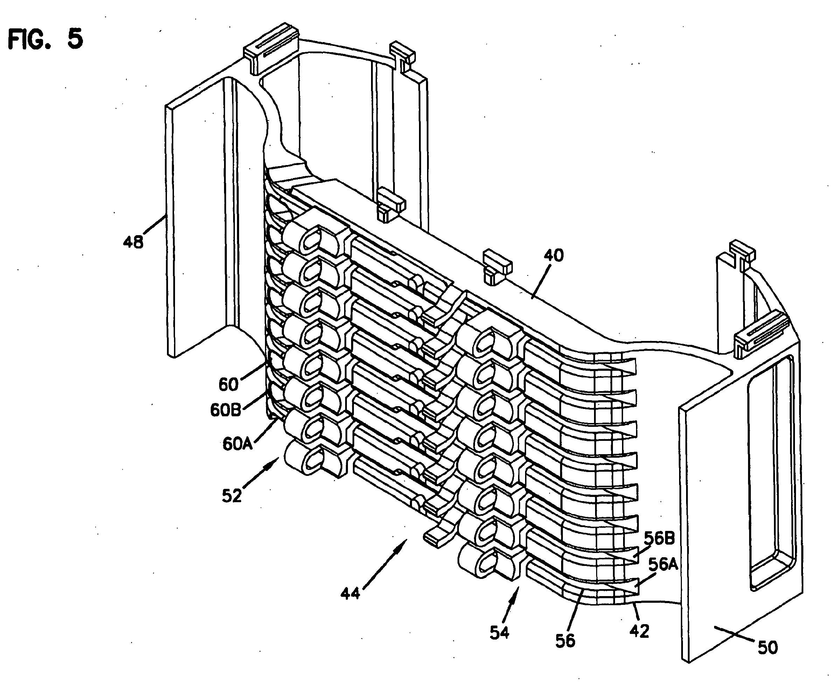

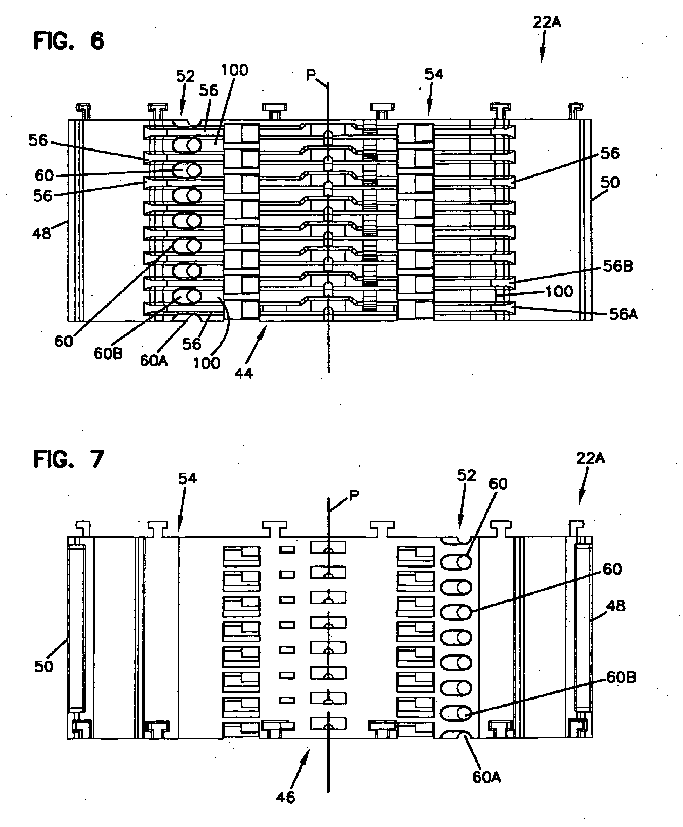

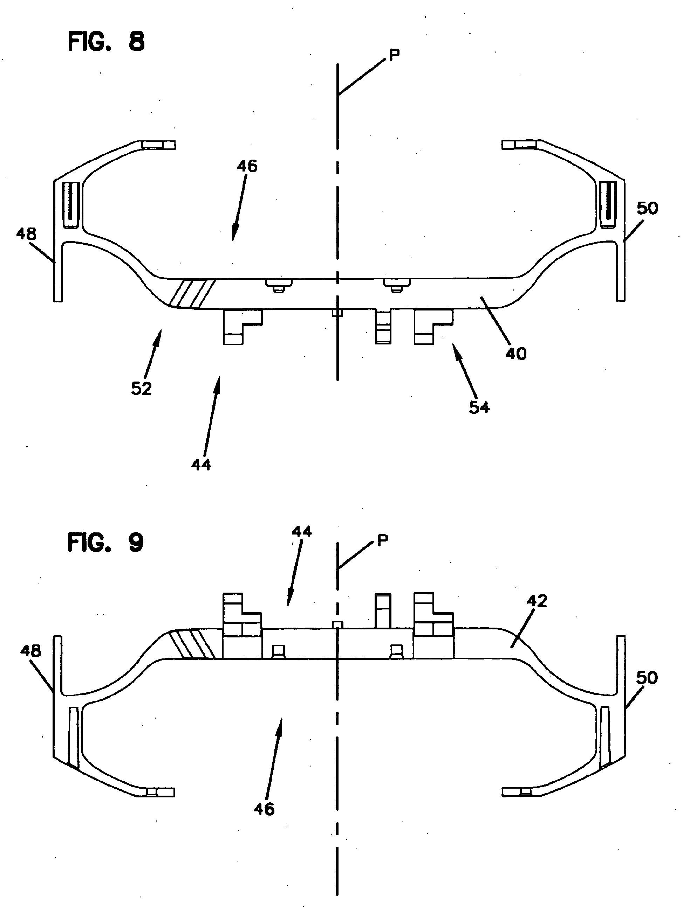

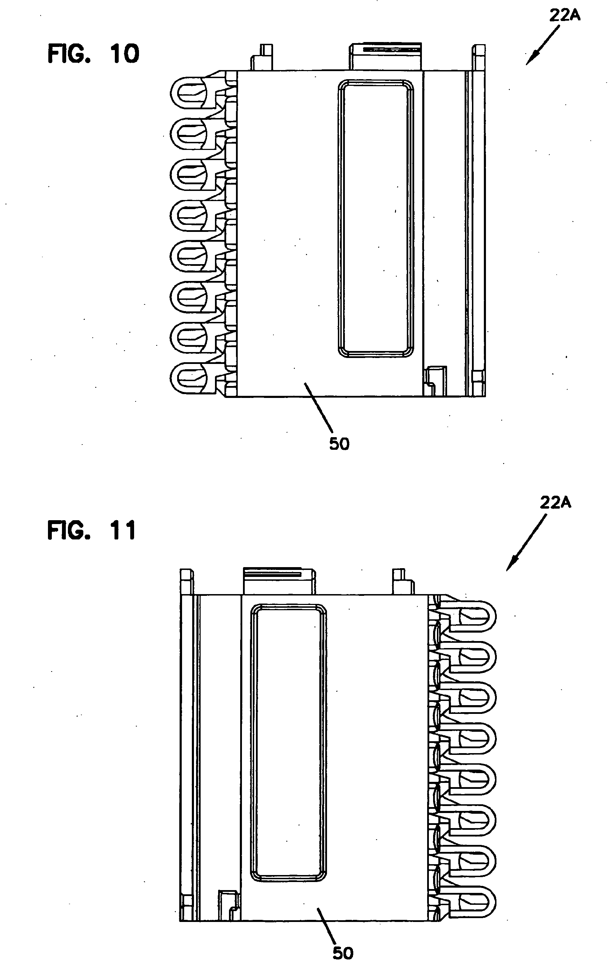

Referring to Figures 4-11, the first tray mounting plate 22A includes a top end 40 (see Figs. 4, 5 and 8), a bottom end 42 (see Figs. 4, 5 and 9), a front side 44 (see Figs. 4, 5 and 6) and a back side 46 (see Fig. 7). The tray mounting plate 22A also includes a first side 48 (e.g., a right side) and an opposite second side 50 (e.g., a left side). The first and second sides 48, 50 extend between the top and bottom ends 40, 42 of the tray mounting plate 22A. As shown at Figures 6 and 8, the tray mounting plate 22A is divided by a vertical reference plane P that extends in a back-to-front orientation and that bisects the tray mounting plate 22A. The first tray mounting plate 22A includes a first region 52 positioned between the first side 48 and the vertical reference plane P. The first tray mounting plate 22A also includes a second region 54 positioned between the vertical reference plane P and the second side 50.

Referring to Figure 6, the front side 44 of the tray mounting plate 22A defines a plurality of front fiber routing grooves 56 that extend length-wise between the first and second sides 48, 50. The front fiber routing grooves 56 have open-sided configurations such that front sides of the front fiber routing grooves 56 are open. The open nature of the front fiber routing grooves 56 provides a "wrap-around" configuration that allows optical fibers to be laid therein without having to thread the optical fibers axially through the front fiber routing grooves 56. The front fiber routing grooves 56 include a first fiber routing groove 56A corresponding to the first fiber management tray 26A and a second fiber routing groove 56B corresponding to the second fiber mounting tray 26B.

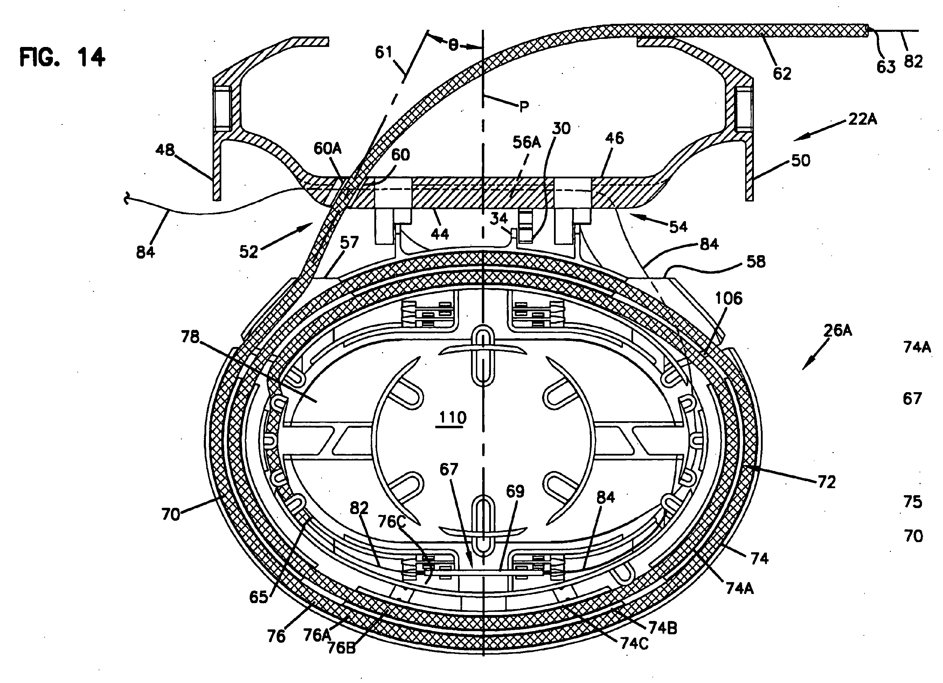

As shown at Figure 1, the fiber management trays 26 include first fiber entrance/exit locations 57 positioned in front of the first region 52 of the first tray mounting plate 22A and second fiber entrance/exit locations 58 positioned in front of the second region 54 of the first tray mounting plate 22A. As best shown at Figures 4-7, the first region 54 of the first tray mounting plate 22A defines a plurality of through-holes 60 that extend through the first tray mounting plate 22A in a back-to-front orientation (i.e., from the back side 46 to the front side 44 of the tray mounting plate 22A). The through-holes 60 align generally with first fiber entrance/exit locations 57 of the fiber management trays 26 and have axes 61 (see Figure 14) that are aligned at oblique angles θ relative to the vertical reference plane P. The axes 61 angle toward the first side 48 as the axes 61 extend in a forward direction. The plurality of through-holes 60 includes a first through-hole 60A that corresponds to the first fiber management tray 26A and a second through-hole 60B that corresponds to the second fiber management tray 26B.

Referring to Figure 6, the through-holes 60 are defined at locations between the front fiber routing grooves 56. Specifically, the front fiber routing grooves 56 are defined between front ribs 100 of the tray mounting plates 22, and the through-holes 60 are defined through the front ribs 100.

Figure 14 shows a first fiber guide tube 62 of the fiber management system 20. The first fiber guide tube 62 has a fiber entrance end 63 positioned on the back side 46 of the first tray mounting plate 22A. The fiber entrance end 63 is shown adjacent to the second side 50 of the first tray mounting plate 20A. As shown at Figure 14, the first fiber guide tube 62 extends from the second side 50 of the first tray mounting plate 22A across the back side 46 of the first tray mounting plate 22A to the first through-hole 60A at the first region 52 of the first tray mounting plate 22A. As the first fiber guide tube 62 extends across the back side 46 of the first tray mounting plate 22A, the first fiber guide tube 62 traverses the vertical reference plane P at a location behind the first tray mounting plate 22A to reach the first through-hole 60A. The first fiber guide tubes 62 then extends through the first through-hole 60A from the back side 46 of the first tray mounting plate 22A to the front side 44 of the first tray mounting plate 22A. From the first through-hole 60A, the first fiber guide tubes 62 further into the first fiber management tray 26A through the first fiber entrance/exit location 57. In Figures 1-13, the fiber guide tubes are not depicted. However, it will be appreciated that in practice, separate fiber guide tubes will be provided for each one of the fiber management trays 26 included as part of the fiber management system 20. Figure 14 shows a fiber guide tube representative routing scheme that can be used for each of the fiber guide tubes of the fiber guide tubes of the fiber management system 20.

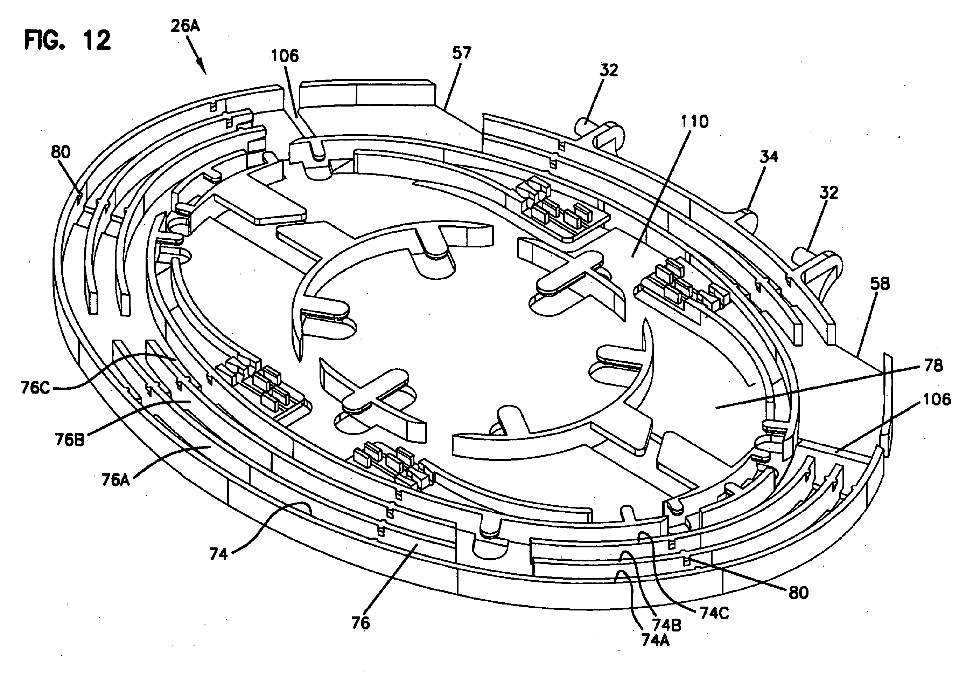

Referring still to Figure 14, the first fiber guide tube 62 is coiled in multiple loops 70 on the first fiber management tray 26A and has a fiber exit end 65 positioned adjacent a splice mounting location 67 of the first fiber management tray 26A. The splice mounting location 67 is configured to hold a splice component 69 (e.g., a splice reinforcing sleeve that surrounds, protects and reinforces a fusion splice between two optical fibers). The first fiber management tray 26A includes an outer portion 72 including a plurality of channels 74 defining a plurality of fiber loop paths 76 that surround a central region 78 of the first fiber management tray 26A. The channels 74 include a first channel 74A defining a first loop path 76A, a second channel 74B defining a second loop path 76B and a third channel 74C defining a third loop path 76C. The loop paths 76A-76C are positioned progressively closer to the central region 78. Thus, as the first fiber guide tube 62 coils around the first fiber management tray 26A from the first channel 74A to the second and third channels 74B and 74C, the first fiber guide tube 62 loops progressively closer to the central region 78. The first fiber management tray 26A includes projections 80 (see Figure 12) that project into the channels 74 for frictionally securing the first fiber guide tube 62 therein.

In practice, the fiber management system 20 is used to manage (e.g., splice. store, split, etc.) first optical fibers routed from the first sides 48 of the tray mounting plates 22 and second optical fibers routed from the second sides 50 of the tray mounting plates 22. Figure 14 shows a representative fiber routing scheme that can be used throughout the fiber management system 20. Referring to Figure 14, a first optical fiber 82 (e.g., a single optical fiber or a group/bundle of optical fibers) is routed from the second side 50 of the first tray mounting plate 22A through the first fiber guide tube 62 to the splice mounting location 67 of the first fiber management tray 26A. The first fiber guide tube 62 guides the first optical fiber 82 across the back side 46 of the first tray mounting plate 22A through the first through-hole 60A and into the first fiber management tray 26A through the first fiber entrance/exit location 57. The first fiber guide tube 62 also guides the first optical fiber 82 on the first fiber management tray 26A from the first fiber entrance/exit location 57 to the splice mounting location 67. After installation of the first fiber 82, the first fiber extends through the first fiber guide tube 62 from the fiber entrance end 63 at the back side of the first tray mounting plate 22A to the exit end 65 adjacent the splice mounting location 67 of the first fiber management tray 26A.

Referring still to Figure 14, a second optical fiber 84 (e.g., a single optical fiber or a group of optical fibers) is routed from the first side 48 of the first tray mounting plate 22A across the front side 44 of the first tray mounting plate 22A within the first fiber routing groove 56A to the second region 54 of the first tray mounting plate 22A. While extending along the first fiber routing groove 56A, the second optical fiber 84 traverses the vertical reference plane P at a location in front of the first tray mounting plate 22A. From the first fiber routing groove 56A at the second region 54 of the first tray mounting plate 22A, the second optical fiber 84 enters the first fiber management tray 26A through the second fiber entrance/exit location 58. The second optical fiber 84 is then routed on the first fiber management tray 26A to the splice mounting location 67 where the second optical fiber 84 can be spliced to the first optical fiber 82 at the splice component 69.

It will be appreciated that the first fiber management tray 26A includes structure for managing and routing the second optical fiber 84. For example, once the second optical fiber 84 has been routed to the first fiber management tray 26A, the second optical fiber 84 can be routed to the central region 78 of the first fiber management tray 26A where excess fiber length can be stored by looping or coiling the second optical fiber 84. The first fiber management tray 26A also includes a fiber routing opening 106 that extends from an underside 108 of the fiber management tray 26A to an upper side 110 of the fiber management tray 26A. The first fiber guide tube 62 is routed along the upper side 110 of the fiber management tray 22A. The second optical fiber 84 is initially routed along the underside 108 of the first fiber management tray 26A and then passes upwardly to the upper side 110 of the first fiber management tray 26A through the fiber routing opening 106 so as to avoid crossing the first fiber guide tube 62 coiled on the first fiber management tray 26A. As shown at Figure 13, the underside 108 of the first fiber management tray 26A includes an undercut portion 112 that extends from the rear of the first fiber management tray 26A to the fiber routing opening 106 for providing clearance for receiving the second optical fiber 84.

In practice, the first optical fiber 82 and the second optical fiber 84 can be field installed. For example, a field technician can insert the first optical fiber 82 into the fiber entrance end 63 of the first fiber guide tube 62 and then axially push the first optical fiber 82 through the first fiber guide tube 62 until the first optical fiber 82 exits the fiber exit end 65 of the first fiber guide tube 62 adjacent the splice mounting location 67. Preferably, a plurality of optical fibers are pushed as a bundle/group through the first fiber guide tube 62 such that the first fiber guide tube 62 guides the group to the splice mounting location 67. The field technician can also install the second optical fiber 84 by routing the second optical fiber 84 along the first fiber routing groove 56A and into the first fiber management tray 26A, and then by manually routing the second optical fiber 84 on the fiber management tray 26A to the splice mounting location 67. The field technician can then fusion splice the first optical fiber 82 to the second optical fiber 84, protect the splice within the splice component 69, and mount the splice component 69 at the splice mounting location 67. After installation, friction between the first optical fiber 82 and the coils of the first fiber guide tube 62 can assist in assist absorbing axial tension load that may be applied to the first fiber 82 thereby preventing the axial tensile loads from being applied to the splice component 69 via the first fiber 82.

### PARTS LIST

Fiber management system 20
Tray mounting plates 22
First tray mounting plate 22A
Second tray mounting plate 22B
Tray mounting location 24
Fiber management trays 26
First fiber management tray 26A
Second fiber management tray 26B
Pin receivers 28
Flexible retention latch 30
Hinge pins 32
Tab 34
Top end 40
Bottom end 42
Front side 44
Back side 46
First side 48
Second side 50
Vertical reference plane P
First region 52
Second region 54
Front fiber routing grooves 56
First fiber routing groove 56A
Second fiber routing groove 56B
First fiber entrance/exit location 57
Second fiber entrance/exit location 58
Through-holes 60
Axes 61
Oblique angles θ
First through-hole 60A
Second through-hole 60B
First fiber guide tube 62
Fiber entrance end 63
Fiber exit end 65
Splice mounting location 67
Splice component 69
Outer portion 72
Channels 74
First channel 74A
Second channel 74B
Third channel 74C
Fiber loop paths 76
First fiber loop path 76A
Second fiber loop path 76B
Third fiber loop path 76C
Central region 78
Projections 80
First optical fiber 82
Second optical fiber 84
Front ribs 100
Fiber routing opening 106
Underside 108
Upper side 110
Undercut portion 112

## Claims

1. A fiber management system (20) comprising a tray mounting plate (22A) having a front side (44) and a back side (46), the fiber management system (20) also including a first fiber management tray (26A) connected to the front side (44) of the tray mounting plate (22A), the tray mounting plate (22A) defines a first through-hole (60A) that extends through the tray mounting plate (22A), the fiber management system (20) including a first fiber guide tube (62) that extends through the first through-hole (60A) from the back side (46) of the tray mounting plate (22A) to the front side (44) of the tray mounting plate (22A), the first fiber guide tube (62) further extending from the first through-hole (60A) into the first fiber management tray (26A) through a first fiber entrance/exit location (57) of the first fiber management tray (26A), wherein the tray mounting plate (22A) also includes a top end (40), a bottom end (42), a first side (48) and an opposite second side (50), the first side (48) and the second side (50) of the tray mounting plate (22A) extending between the top and bottom ends (40, 42) of the tray mounting plate (22A), wherein the tray mounting plate (22A) is divided by a vertical reference plane (P) that extends in a back-to-front orientation and that bisects the tray mounting plate (22A), the tray mounting plate (22A) including a first region (52) positioned between the first side (48) and the vertical reference plane (P), the tray mounting plate (22A) also including a second region (54) positioned between the vertical reference plane (P) and the second side (50), the front side (44) of the tray mounting plate (22A) defining a plurality of front fiber routing grooves (56) that extend lengthwise between the first and second sides (48, 50), the front fiber routing grooves (56) having open sided configurations, the front fiber routing grooves (56) including a first fiber routing groove (56A) that corresponds to the first fiber management tray (26A), the first fiber entrance/exit location (57) of the first fiber management tray (26A) being positioned in front of the first region (52) of the tray mounting plate (22A), the first fiber management tray (26A) also including a second fiber entrance/exit location (58) positioned in front of the second region (54) of the tray mounting plate (22A), the first fiber management tray (26A) being pivotally connected to the tray mounting plate (22A), the tray mounting plate (22A) defining a plurality of through-holes (60) that extend from the back side (46) to the front side (44) of the tray mounting plate (22A), the plurality of through-holes (60) being positioned at the first region (52) of the tray mounting plate (22A) and including the first through-hole (60A) that corresponds to the first fiber management tray (26A).

2. The fiber management system (20) of claim 1, wherein the fiber management tray (26) includes an outer portion (72) including a plurality of channels (74) defining a plurality of loop paths (76) that surround a central region (78) of the fiber management tray (26A) and are respectively positioned progressively closer to the central region (78), and wherein the first fiber guide tube (62) is coiled within the channels (74) and extends along loop paths (76).

3. The fiber management system (20) of claim 2, wherein the fiber management tray (26) includes projections (80) that project into the channels (74) for retaining the first fiber guide tube (62) therein.

4. The fiber management system (20) of one of the foregoing claims, wherein at least a first optical fiber (82) originating from the second side (50) of the tray mounting plate (22A) is routed through the first fiber guide tube (62), the first optical fiber (82) being routed across the back side (46) of the tray mounting plate (22A), and the first optical fiber (82) traversing the vertical reference plane (P) at a location behind the tray mounting plate (22A).

5. The fiber management system (20) of one of the foregoing claims, wherein the through-holes (60) are defined between the front fiber routing grooves (56).

6. The fiber management system (20) of one of the foregoing claims, wherein the front fiber routing grooves (56) are defined between front ribs (100) of the tray mounting plate (22A), and wherein the through-holes (60) are defined through the front ribs (100).

7. The fiber management system (20) of claim 4, wherein at least a second optical fiber (84) originating from the first side (48) of the tray mounting plate (22A) is routed along the first fiber routing groove (56A) across the vertical reference plane (P) and into the first fiber management tray (26A) through the second fiber entrance/exit location (58), the second optical fiber (84) traversing the vertical reference plane (P) at a location in front of the tray mounting plate (22A).

8. The fiber management system (20) of claim 7, wherein the first and second optical fibers (82, 84) are spliced together on the first fiber management tray (26A).

9. The fiber management system (20) of claims 7 or 8, wherein the first fiber management tray (26A) includes a fiber routing opening (106) that extends from an underside (108) of the first fiber management tray (26A) to an upper side (110) of the first fiber management tray (26A), wherein the first fiber guide tube (62) is routed along the upper side (110) of the first fiber management tray (26A), wherein the second optical fiber (84) is routed along the underside (108) of the first fiber management tray (26A) and then passes upwardly to the upper side (110) of the first fiber management tray (26A) through the fiber routing opening (106) so as to avoid crossing the first fiber guide tube (62) on the first fiber management tray (26A).

10. The fiber management system (20) of one of the foregoing claims, wherein the tray mounting plate (22A) has at least four tray mounting locations (24) for pivotally mounting at least four of the fiber management trays (26), and wherein the tray mounting plate (22A) includes through-holes (60) and front fiber routing grooves (56) corresponding to each of the tray mounting locations (24).

11. The fiber management system (20) of one of the foregoing claims, wherein the tray mounting plate (22A) has at least eight tray mounting locations (24) for pivotally mounting at least eight of the fiber management trays (26), and wherein the tray mounting plate (22A) includes through-holes (60) and front fiber routing grooves (56) corresponding to each of the tray mounting locations (24).

12. The fiber management system (20) of one of the foregoing claims, wherein axes (61) of the through-holes (60) angle toward the first side (48) of the tray mounting plate (22A) as the axes (61) extend forwardly through the tray mounting plate (22A), the axes (61) being aligned at oblique angles (θ) relative to the vertical reference plane (P).

## Patentansprüche

1. Faserverwaltungssystem (20), das eine Einsatzanbringungsplatte (22A) umfasst, die eine Vorderseite (44) und eine Rückseite (46) hat, wobei das Faserverwaltungssystem (20) ebenfalls einen ersten Faserverwaltungseinsatz (26A) einschließt, der mit der Vorderseite (44) der Einsatzanbringungsplatte (22A) verbunden ist, wobei die Einsatzanbringungsplatte (22A) ein erstes Durchgangsloch (60A) definiert, das sich durch die Einsatzanbringungsplatte (22A) erstreckt, wobei das Faserverwaltungssystem (20) eine erste Faserführungsröhre (62) einschließt, die sich von der Rückseite (46) der Einsatzanbringungsplatte (22A) bis zu der Vorderseite (44) der Einsatzanbringungsplatte (22A) durch das erste Durchgangsloch (60A) erstreckt, wobei sich die erste Faserführungsröhre (62) ferner von dem ersten Durchgangsloch (60A) durch eine erste Fasereintritts-/-austrittsposition (57) des ersten Faserverwaltungseinsatzes (26A) in den ersten Faserverwaltungseinsatz (26A) erstreckt, wobei die Einsatzanbringungsplatte (22A) ebenfalls ein oberes Ende (40), ein unteres Ende (42), eine erste Seite (48) und eine gegenüberliegende zweite Seite (50) einschließt, wobei sich die erste Seite (48) und die zweite Seite (50) der Einsatzanbringungsplatte (22A) zwischen dem oberen und dem unteren Ende (40, 42) der Einsatzanbringungsplatte (22A) erstrecken, wobei die Einsatzanbringungsplatte (22A) durch eine vertikale Bezugsebene (P) geteilt ist, die sich in einer Ausrichtung von hinten nach vom erstreckt und welche die Einsatzanbringungsplatte (22A) zweiteilt, wobei die Einsatzanbringungsplatte (22A) einen ersten Bereich (52) einschließt, der zwischen der ersten Seite (48) und der vertikalen Bezugsebene (P) angeordnet ist, wobei die Einsatzanbringungsplatte (22A) ebenfalls einen zweiten Bereich (54) einschließt, der zwischen der vertikalen Bezugsebene (P) und der zweiten Seite (50) angeordnet ist, wobei die Vorderseite (44) der Einsatzanbringungsplatte (22A) mehrere vordere Faserleitrillen (56) definiert, die sich längs zwischen der ersten und der zweiten Seite (48, 50) erstrecken, wobei die vorderen Faserleitrillen (56) offenseitige Konfigurationen haben, wobei die vorderen Faserleitrillen (56) eine erste Faserleitrille (56A) einschließen, die dem ersten Faserverwaltungseinsatz (26A) entspricht, wobei die erste Fasereintritts-/-austrittsposition (57) des ersten Faserverwaltungseinsatzes (26A) vor dem ersten Bereich (52) der Einsatzanbringungsplatte (22A) angeordnet ist, wobei der erste Faserverwaltungseinsatz (26A) ebenfalls eine zweite Fasereintritts-/-austrittsposition (58) einschließt, die vor dem zweiten Bereich (54) der Einsatzanbringungsplatte (22A) angeordnet ist, wobei der erste Faserverwaltungseinsatz (26A) schwenkbar mit der Einsatzanbringungsplatte (22A) verbunden ist, wobei die Einsatzanbringungsplatte (22A) mehrere Durchgangslöcher (60) definiert, die sich von der Rückseite (46) zu der Vorderseite (44) der Einsatzanbringungsplatte (22A) erstrecken, wobei die mehreren Durchgangslöcher (60) an dem ersten Bereich (52) der Einsatzanbringungsplatte (22A) angeordnet sind und das erste Durchgangsloch (60A) einschließen, das dem ersten Faserverwaltungseinsatz (26A) entspricht.

2. Faserverwaltungssystem (20) nach Anspruch 1, wobei der Faserverwaltungseinsatz (26) einen äußeren Abschnitt (72) einschließt, der mehrere Kanäle (74) einschließt, die mehrere Schleifenbahnen (76) definieren, die einen Mittelbereich (78) des Faserverwaltungseinsatzes (26A) umschließen, und jeweils zunehmend näher zu dem Mittelbereich (78) angeordnet sind, und wobei die erste Faserführungsröhre (62) innerhalb der Kanäle (74) aufgewickelt ist und sich entlang der Schleifenbahnen (76) erstreckt.

3. Faserverwaltungssystem (20) nach Anspruch 2, wobei der Faserverwaltungseinsatz (26) Vorsprünge (80) einschließt, die in die Kanäle (74) vorspringen, um die erste Faserführungsröhre (62) in denselben zurückzuhalten.

4. Faserverwaltungssystem (20) nach einem der vorhergehenden Ansprüche, wobei wenigstens ein erster Lichtwellenleiter (82), der von der zweiten Seite (50) der Einsatzanbringungsplatte (22A) entspringt, durch die erste Faserführungsröhre (62) geleitet wird, wobei der erste Lichtwellenleiter (82) über die Rückseite (46) der Einsatzanbringungsplatte (22A) geleitet wird und der erste Lichtwellenleiter (82) die vertikale Bezugsebene (P) an einer Position hinter der Einsatzanbringungsplatte (22A) quert.

5. Faserverwaltungssystem (20) nach einem der vorhergehenden Ansprüche, wobei die Durchgangslöcher (60) zwischen den vorderen Faserleitrillen (56) definiert werden.

6. Faserverwaltungssystem (20) nach einem der vorhergehenden Ansprüche, wobei die vorderen Faserleitrillen (56) zwischen vorderen Rippen (100) der Einsatzanbringungsplatte (22A) definiert werden und wobei die Durchgangslöcher (60) durch die vorderen Rippen (100) definiert werden.

7. Faserverwaltungssystem (20) nach Anspruch 4, wobei wenigstens ein zweiter Lichtwellenleiter (84), der von der ersten Seite (48) der Einsatzanbringungsplatte (22A) entspringt, entlang der ersten Faserleitrille (56A) über die vertikale Bezugsebene (P) und durch die zweite Fasereintritts-/-austrittsposition (58) in den ersten Faserverwaltungseinsatz (26A) geleitet wird, wobei der zweite Lichtwellenleiter (84) die vertikale Bezugsebene (P) an einer Position vor der Einsatzanbringungsplatte (22A) quert.

8. Faserverwaltungssystem (20) nach Anspruch 7, wobei der erste und der zweite Lichtwellenleiter (82, 84) auf dem ersten Faserverwaltungseinsatz (26A) miteinander verbunden sind.

9. Faserverwaltungssystem (20) nach Anspruch 7 oder 8, wobei der erste Faserverwaltungseinsatz (26A) eine Faserleitöffnung (106) einschließt, die sich von einer Unterseite (108) des ersten Faserverwaltungseinsatzes (26A) zu einer Oberseite (110) des ersten Faserverwaltungseinsatzes (26A) erstreckt, wobei die erste Faserführungsröhre (62) entlang der Oberseite (110) des ersten Faserverwaltungseinsatzes (26A) geleitet wird, wobei der zweite Lichtwellenleiter (84) entlang der Unterseite (108) des ersten Faserverwaltungseinsatzes (26A) geleitet wird und danach durch die Faserleitöffnung (106) zu der Oberseite (110) des ersten Faserverwaltungseinsatzes (26A) hindurchgeht, um so ein Kreuzen der ersten Faserführungsröhre (62) auf dem ersten Faserverwaltungseinsatz (26A) zu vermeiden.

10. Faserverwaltungssystem (20) nach einem der vorhergehenden Ansprüche, wobei die Einsatzanbringungsplatte (22A) wenigstens vier Einsatzanbringungspositionen (24) zum schwenkbaren Anbringen von wenigstens vier der Faserverwaltungseinsätze (26) hat und wobei die Einsatzanbringungsplatte (22A) Durchgangslöcher (60) und vordere Faserleitrillen (56) einschließt, die jeder der Einsatzanbringungspositionen (24) entsprechen.

11. Faserverwaltungssystem (20) nach einem der vorhergehenden Ansprüche, wobei die Einsatzanbringungsplatte (22A) wenigstens acht Einsatzanbringungspositionen (24) zum schwenkbaren Anbringen von wenigstens acht der Faserverwaltungseinsätze (26) hat und wobei die Einsatzanbringungsplatte (22A) Durchgangslöcher (60) und vordere Faserleitrillen (56) einschließt, die jeder der Einsatzanbringungspositionen (24) entsprechen.

12. Faserverwaltungssystem (20) nach einem der vorhergehenden Ansprüche, wobei sich Achsen (61) der Durchgangslöcher (60) zu der ersten Seite (48) der Einsatzanbringungsplatte (22A) hin abwinkeln, wenn sich die Achsen (61) nach vom durch die Einsatzanbringungsplatte (22A) erstrecken, wobei die Achsen (61) in schiefen Winkeln (θ) im Verhältnis zu der vertikalen Bezugsebene (P) ausgerichtet sind.

## Revendications

1. Système de gestion de fibres (20) comprenant une plaque de montage de plateaux (22A) possédant un côté antérieur (44) et un côté postérieur (46), le système de gestion de fibres (20) incluant également un premier plateau de gestion de fibres (26A) relié au côté antérieur (44) de la plaque de montage de plateaux (22A), la plaque de montage de plateaux (22A) définit un premier trou de passage (60A) qui traverse la plaque de montage de plateaux (22A), le système de gestion de fibres (20) incluant un premier tube de guidage de fibre (62) qui s'étend du côté postérieur (46) de la plaque de montage de plateaux (22A) au côté antérieur (44) de la plaque de montage de plateaux (22A) en passant à travers le premier trou de passage (60A), le premier tube de guidage de fibre (62) s'étendant, en outre, du premier trou de passage (60A) dans le premier plateau de gestion de fibres (26A) en passant par un premier point d'entrée/sortie de fibre (57) du premier plateau de gestion de fibres (26A), dans lequel la plaque de montage de plateaux (22A) inclut également une extrémité supérieure (40), une extrémité inférieure (42), un premier côté (48) et un second côté (50) opposé, le premier côté (48) et le second côté (50) de la plaque de montage de plateaux (22A) s'étendant entre les extrémités supérieure et inférieure (40, 42) de la plaque de montage de plateaux (22A), dans lequel la plaque de montage de plateaux (22A) est divisée par un plan de référence vertical (P) qui est orienté de l'arrière vers l'avant et coupe la plaque montage de plateaux (22A) en deux, la plaque de montage de plateaux (22A) incluant une première zone (52) positionnée entre le premier côté (48) et le plan de référence vertical (P), la plaque de montage de plateaux (22A) incluant également une seconde zone (54) positionnée entre le plan de référence vertical (P) et le second côté (50), le côté antérieur (44) de la plaque de montage de plateaux (22A) définissant une pluralité de rainures antérieures d'acheminement de fibre (56) qui s'étendent dans le sens de la longueur entre les premier et second côtés (48, 50), les rainures antérieures d'acheminement de fibre (56) ayant des configurations à côtés ouverts, les rainures antérieures d'acheminement de fibre (56) incluant une première rainure d'acheminement de fibre (56A) qui correspond au premier plateau de gestion de fibres (26A), le premier point d'entrée/sortie de fibre (57) du premier plateau de gestion de fibres (26A) étant positionné en face de la première zone (52) de la plaque de montage de plateaux (22A), le premier plateau de gestion de fibres (26A) incluant également un second point d'entrée/sortie de fibre (58) positionné en face de la seconde zone (54) de la plaque de montage de plateaux (22A), le premier plateau de gestion de fibres (26A) étant relié de manière pivotante à la plaque de montage de plateaux (22A), la plaque de montage de plateaux (22A) définissant une pluralité de trous de passage (60) qui s'étendent du côté postérieur (46) au côté antérieur (44) de la plaque de montage de plateaux (22A), la pluralité de trous de passage (60) étant positionnée au niveau de la première zone (52) de la plaque de montage de plateaux (22A) et incluant le premier trou de passage (60A) qui correspond au premier plateau de gestion de fibres (26A).

2. Système de gestion de fibres (20) selon la revendication 1, dans lequel le plateau de gestion de fibres (26) comprend une partie externe (72) incluant une pluralité de canaux (74) définissant une pluralité de chemins en boucle (76) qui entourent une zone centrale (78) du plateau de gestion de fibres (26A) et sont respectivement positionnés de plus en plus près de la zone centrale (78), et dans lequel le premier tube de guidage de fibre (62) est enroulé à l'intérieur des canaux (74) et s'étend le long des chemins en boucle (76).

3. Système de gestion de fibres (20) selon la revendication 2, dans lequel le plateau de gestion de fibres (26) inclut des saillies (80) qui avancent dans les canaux (74) pour y retenir le premier tube de guidage de fibre (62).

4. Système de gestion de fibres (20) selon l'une des revendications précédentes, dans lequel au moins une première fibre optique (82) provenant du second côté (50) de la plaque de montage de plateaux (22A) est acheminée à travers le premier tube de guidage de fibre (62), la première fibre optique (82) étant acheminé à travers le côté postérieur (46) de la plaque de montage de plateaux (22A) et la première fibre optique (82) traversant le plan de référence vertical (P) en un point situé derrière la plaque de montage de plateaux (22A).

5. Système de gestion de fibres (20) selon l'une des revendications précédentes, dans lequel les trous de passage (60) sont définis entre les rainures antérieures d'acheminement de fibre (56).

6. Système de gestion de fibres (20) selon l'une des revendications précédentes, dans lequel les rainures antérieures d'acheminement de fibre (56) sont définies entre des nervures frontales (100) de la plaque de montage de plateaux (22A) et dans lequel les trous de passage (60) sont définis à travers les nervures frontales (100).

7. Système de gestion de fibres (20) selon la revendication 4, dans lequel au moins une seconde fibre optique (84) provenant du premier côté (48) de la plaque de montage de plateaux (22A) est acheminée le long de la première rainure d'acheminement de fibre (56A), traverse le plan de référence vertical (P) et entre dans le premier plateau de gestion de fibre (26A) par le second point d'entrée/sortie de fibre (58), la seconde fibre optique (84) traversant le plan de référence vertical (P) en un point situé devant la plaque de montage de plateaux (22A).

8. Système de gestion de fibres (20) selon la revendication 7, dans lequel les première et seconde fibres optiques (82, 84) sont épissurées ensemble sur le premier plateau de gestion de fibres (26A).

9. Système de gestion de fibres (20) selon les revendications 7 ou 8, dans lequel le premier plateau de gestion de fibres (26A) inclut une ouverture d'acheminement de fibre (106) qui s'étend d'un côté inférieur (108) du premier plateau de gestion de fibres (26A) vers un côté supérieur (110) du premier plateau de gestion de fibres (26A), dans lequel le premier tube de guidage de fibre (62) est acheminé le long du côté supérieur (110) du premier plateau de gestion de fibres (26A), dans lequel la seconde fibre optique (84) est acheminée le long du côté inférieur (108) du premier plateau de gestion de fibres (26A) et monte ensuite vers le côté supérieur (110) du premier plateau de gestion de fibres (26A) en passant à travers l'ouverture d'acheminement de fibre (106) de manière à éviter de croiser le premier tube de guidage de fibre (62) sur le premier plateau de gestion de fibres (26A).

10. Système de gestion de fibres (20) selon l'une des revendications précédentes, dans lequel la plaque de montage de plateaux (22A) comporte au moins quatre emplacements de montage de plateau (24) permettant un montage pivotant d'au moins quatre des plateaux de gestion de fibres (26) et dans lequel la plaque de montage de plateaux (22A) est pourvue de trous de passage (60) et de rainures antérieures d'acheminement de fibre (56) correspondant à chacun des emplacements de montage de plateau (24).

11. Système de gestion de fibres (20) selon l'une des revendications précédentes, dans lequel la plaque de montage de plateaux (22A) comporte au moins huit emplacements de montage de plateau (24) permettant un montage pivotant d'au moins huit des plateaux de gestion de fibres (26) et dans lequel la plaque de montage de plateaux (22A) est pourvue de trous de passage (60) et de rainures antérieures d'acheminement de fibre (56) correspondant à chacun des emplacements de montage de plateau (24).

12. Système de gestion de fibres (20) selon l'une des revendications précédentes, dans lequel des axes (61) des trous de passage (60) sont inclinés en direction du premier côté (48) de la plaque de montage de plateaux (22A) au moment où ces axes (61) s'étendant vers l'avant traversent la plaque de montage de plateaux (22A), les axes (61) formant des angles obliques (θ) par rapport au plan de référence vertical (P).
